# EUROPÄISCHE PATENTANMELDUNG

(11) **EP 2 422 978 A1**
(43) Veröffentlichungstag der Anmeldung: **29.02.2012**
(21) Anmeldenummer: 11178815.4
(22) Anmeldetag: 25.08.2011
(51) Int. Cl.: B32B 37/00, A47B 87/00

(54) **Laminiereinrichtung**

(30) Priorität: 26.08.2010 DE 202010011881 U; 26.08.2010 DE 202010011880 U
(71) Anmelder: Modulmounter ApS, 2840 Holle (DK); Walter, Herbert William, 2840 Holle (DK)
(72) Erfinder: WALTER, Herbert William, 2840 Holte (DK)
(74) Vertreter: Pedersen, Tenna Marian

(57) **Zusammenfassung**

Die Erfindung betrifft eine Laminiervorrichtung, die aus modularen Segmenten (1,2) zusammengesetzt ist. Damit ist es möglich durch Anfügen und/oder Austausch einzelner Modulteile die Maße des resultierenden Laminiertisches sehr einfach und kostengünstig zu verändern. Die Erfindung löst damit auch das Problem des Transports und der Installation auch sehr groß dimensionierter Laminiervorrichtungen, da statt eines kompakten Laminiertisches nur die erfindungsgemäßen modularen Elemente (1,2) zu transportieren sind.

## Beschreibung

Die vorliegende Erfindung betrifft Laminiereinrichtungen, insbesondere Laminiertische mit einer mittels einer Rahmen-struktur getragenen Auflageebene, auf der eine Folie angebracht ist, die die Auflageebene überdeckt, wobei zwei an gegenüberliegenden Seiten der Rahmenstruktur parallel verlaufende Schienenelemente befestigt sind, die als Führung für eine quer zu den Schienenelementen über der Auflageebene verlaufende Walzeneinheit dienen, die über einen beidseitig angeordneten Verschiebemechanismus auf den Schienenelementen linear verfahrbar ist, wobei die Walzeneinheit eine Walze aufweist, welche die Auflageebene zumindest teilweise überbrückt und deren Achse mittels vertikaler Verstelleinrichtung beidseitig gegenüber der Auflageebene höhenverstellbar ist.

Innerhalb der Schilderbranche ist es erforderlich, die mittels Inkjet- oder Offsetverfahren gedruckten Bilder oder Texte gegen Umwelteinflüsse, wie z.B. mechanische Belastung, mit einer schützenden Beschichtung zu versehen, z.B. mit einer klaren oder matten Laminierung, so dass die wiedergegebenen Bilder oder Texte nicht so leicht zerkratzt oder anderweitig beschädigt werden können. Dies ist beispielsweise vorteilhaft für Darstellungen auf Schildern, die im Freien eingesetzt werden und die damit auch Witterungseinflüssen ausgesetzt sind. Insbesondere Plakatierungen auf Autos müssen geschützt werden, da durch die Reinigungsprozesse in automatischen Waschanlagen die dargestellten Bilder oder Texte zerkratzt würden.

Bei der üblichen Laminier-Technik werden Texte, Bilder oder grafische Muster zunächst auf eine selbstklebende Folie übertragen, deren klebende Fläche mit einer abziehbaren Schicht, z.B. aus Papier, bedeckt ist. Nach Positionierung der Klebefolie über der zu laminierenden Unterlage wird schrittweise die abziehbare Schicht entfernt und die Klebefolie auf die Unterlage angedrückt und damit fixiert. Die zu laminierende Unterlage, z.B. Schilder oder Ausstellungswände, kann dabei z.B. aus Pappe, Kunststoff, Holz oder Metall bestehen.

Wichtig ist es dabei, dass die Bilder und Texte glatt und ohne Einschluss von Luftblasen direkt auf das Grundmaterial übertragen werden. Dieser Prozess kann insbesondere bei manueller Laminierung schwierig durchzuführen sein, speziell auf großen Flächen. Häufig verbleiben Lufteinschlüsse oder es bilden sich Falten, die nachträglich nicht mehr entfernt werden können.

Um dies zu vermeiden kann hilfsweise Seifenwasser genutzt werden. Dabei trägt man die Seifenlösung z.B. mit einer Sprühflasche auf das Bild- oder Textdokument auf und der Klebstoff des Laminats haftet dadurch nicht sofort auf den Bild- bzw. Textdokumenten. Man kann dann leicht mit einem Schieber oder einer Handwalze das Seifenwasser und eventuell vorhandene Lufteinschlüsse herausdrücken. Wenn anschließend die geringe Restmenge Seifenwasser verdampft ist, verbleibt eine glatte Fläche und es entsteht eine starke Klebewirkung.

Nachteil dieser Methode ist, dass nach jedem Laminiervorgang praktisch der gesamte Laminiertisch mit Seifenwasser bedeckt ist und der nächste Prozess kann erst stattfinden, wenn alles gereinigt ist.

Eine mechanische Vorrichtung, um Schutzlaminat zu übertragen, bei der auf Seifenwasser verzichtet werden kann, nutzt zwei aneinander liegende rotierende Gummiwalzen, zwischen denen das Bildmaterial und die Laminierfolie zusammen durchgefahren werden. In der Regel werden dabei die rotierenden Gummiwalzen mit einem mechanischen System gegeneinander gepresst und durch den entsprechenden Druck der Gummiwalzen werden Luftblasen und Knicke bei diesem Laminiervorgang vermieden.

Diese maschinelle Laminiereinrichtung hat den Nachteil, dass es schwierig sein kann, Laminierfolie und Bild- bzw. Textmaterial ganz gerade durch die Maschine laufen zu lassen. Bereits eine sehr kleine Verdrehung beim Einlegen bewirkt beim Durchlaufen einen Schräglauf, der - abhängig von der Länge des Laminierguts ― bis zu mehreren Zentimetern Versatz anwachsen kann.

Ebenso ist es unvermeidlich, dass bei zwei Gummiwalzen die mechanisch über ihre Drehachsen gegeneinander gepresst werden, je nach Länge der Walzen ein größerer Pressdruck auf das Laminiergut im Bereich der Rollen-Enden besteht. Die Abnahme des Andrucks im Bereich der Rollemitte kann wieder zu Lufteinschlüssen in der Mitte des laminierten Materials führen. Dieser Effekt tritt insbesondere bei der Laminierung größerer Vorlagen auf.

Um dieses Problem zu vermeiden sind Laminiervorrichtungen entwickelt worden, bei denen Gummiwalzen mit spezieller Form eingesetzt werden. So kann beispielsweise der Querschnitt einer oder beider Walzen so angepasst werden, dass die Walzen zur Mitte hin zunehmend dicker sind und damit der Druck im mittleren Bereich dem Druck am Rand einigermaßen entspricht. Diese Technik ist nicht ideal, da auch die Materialeigenschaften des Laminierguts einen wesentlichen Faktor für den Laminierprozess darstellen. Nichtzylindrische Walzen können daher bestenfalls auf eine Materialart optimiert werden ― bei anderem Laminiermaterial kann eine solche Vorrichtung sogar zu einer Verstärkung der Blasenbildung führen.

Um lange Objekte, z.B. Platten aus Kunststoff oder Metall, mit Bildern/Texten zu laminieren, muss auf der Einlaufseite ein Einlasstisch zur Unterstützung vorhanden sein, damit die Platten gerade zwischen die Gummiwalzen hineingeführt werden kann. Ebenso ist auf der Auslaufseite ein Auslasstisch erforderlich, um zu verhindern, dass sich die Platte beim Auslass durchbiegt oder auf den Boden fällt. Diese unterstützenden Tischbereiche sind bei handelsüblichen Laminiertischen oft nicht vorhanden oder aus Platzgründen zu klein.

Eine Lösung für diese Probleme besteht beispielsweise darin, dass das zu laminierende Objekt auf einer ebenen Fläche, zum Beispiel einem Tisch, platziert wird und dann eine Walze, die über zwei parallele Schienen läuft, unter Druck über das zum laminierende Objekt manuell gezogen wird und dadurch das Laminat blasen- und knickfrei auf das gewünschte Material aufgetragen wird. Als Gegendruck dient dabei eine auf dem Tisch vorhandene Kunststoffschicht von ca. 5mm Dicke.

Eine solche Laminiereinrichtung ist beispielsweise beschrieben in der Europäischen Patentschrift EP 0986459.

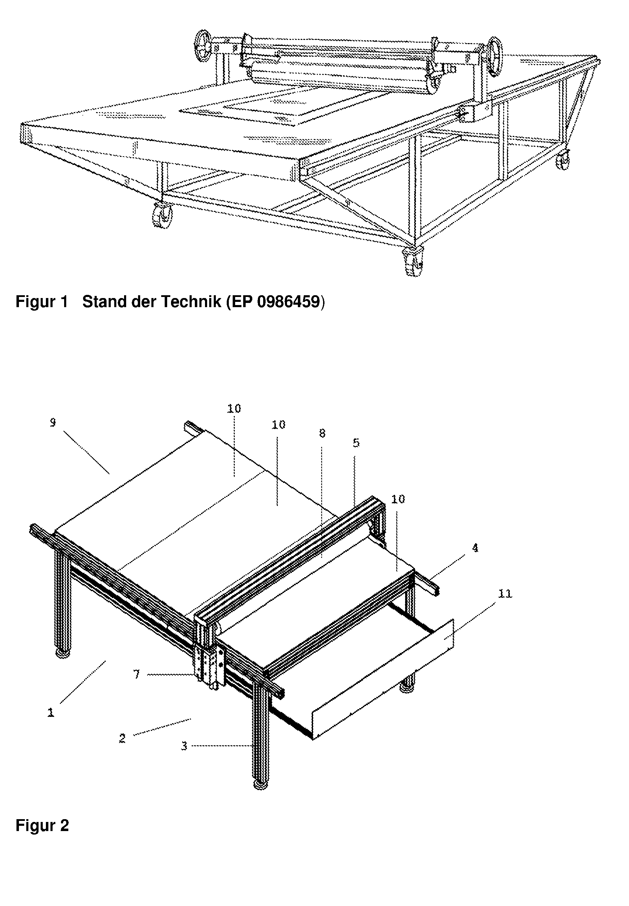

Bei dieser Vorrichtung ist als Unterlage ein stabiler rechteckförmiger Laminiertisch vorgesehen, auf dem das zu laminierende Objekt aufgelegt wird. Die Figur 1 zeigt diese Vorrichtung nach dem Stand der Technik. Je nach Ausführung beträgt die Länge des Tisches mehrere Meter, auch die Breite des Tisches kann je nach Anwendungsanforderung mehrere Meter betragen. Entlang der Längsseiten des Tisches befinden sich Führungsschienen, auf denen mittels Verfahrmechanismus eine quer zur Längsrichtung des Laminiertisches angeordnete Walzvorrichtung verschiebbar angeordnet ist. Die Walzvorrichtung weist dabei eine oberhalb der Walze angeordnete stabile Querstrebe auf, die beidseitig starr mit dem Verschiebmechanismus verbunden ist. Mittels Verstellvorrichtung kann die Walze parallel zur Querstrebe höhenverstellt werden. Damit kann bei angehobener Walze die ganze Walzvorrichtung ohne Kontakt mit der Unterlage manuell in eine gewünschte Position über dem Tisch verfahren werden. Für den eigentlichen Laminierprozess wird dann die Walze mittels Verstellvorrichtung auf die Unterlage abgesenkt und dabei der gewünschte Druck auf das zu laminierende Objekt aufgebaut.

Um dem Andruck der Walze standzuhalten, ist beim vorbekannten Laminiertisch die Auslegefläche aus einer starren Platte gebildet, die zur Verstärkung auch als Mehrschichtplatte z.B. aus 22mm Bauplatten ausgeführt sein kann.

Die in dieser Schrift beschriebene Laminiervorrichtung weist den Nachteil auf, dass sie gemäß der jeweiligen Anforderungen in ihren Dimensionen weitgehend festgelegt ist. Ein Erwerber muss sich also vor dem Kauf einer solchen Vorrichtung für eine Tischlänge und Tischbreite entscheiden - eine nachträgliche Veränderung der Tischgröße würde einen Umbau erfordern, der praktisch einer kompletten Neuerstellung entspräche. So müsste die in einem Stück als Auflagefläche eingebaute Platte komplett ausgetauscht werden und auch die gesamte tragende Konstruktion des Tischrahmens wäre durch eine auf die neue Auslegefläche zugeschnittene Tragkonstruktion zu ersetzen. Ebenso wären die Walze und die Verstellvorrichtung bei einer geänderten Breite des Laminiertisches neu zu erstellen.

Problematisch ist insbesondere auch bei großen Ausführungen des bekannten Laminiertisches der Transport zum Kunden, da ein sehr großer Rahmen und eine entsprechend sperrige Auflageplatte nur mit speziellen Transportfahrzeugen als Frachtgut schadenfrei transportiert werden können.

Eine weitere Schwierigkeit kann entstehen, wenn der Aufstellort beim Erwerber aufgrund beengter räumlicher Gegebenheiten nicht die ausreichenden Möglichkeiten zur Anlieferung und Errichtung des Laminiertisches aufweist. So ist bereits das Einbringen und Aufstellen eines größeren Laminiertisches der beschriebenen Bauart in einem ebenerdig gelegenen Werkraum beispielsweise nur dann möglich, wenn ausreichend dimensionierte Zugangstore und -wege vorhanden sind, um den Rahmen und die Auflageplatte in den Raum einzubringen. Nahezu unmöglich ist das Aufstellen derartiger Laminiertische in Kellerräumen oder in höher gelegenen Stockwerken, da hier meist keine Möglichkeit existiert, einen großen Rahmen und die Auflageplatte in den Raum hineinzubringen.

Weiter weist die in der Patentschrift EP 0986459 beschriebene Laminiereinrichtung den Nachteil auf, dass die über der Walze angeordnete Querstrebe ein freies Handhaben der Laminierfolie während des Laminierprozesses behindern kann.

Die vorliegende Erfindung geht aus von der in der Patentschrift EP 0986459 offenbarten Laminiervorrichtung als nächstliegendem Stand der Technik. Ihr liegt die Aufgabe zugrunde, eine Laminiereinrichtung zu entwickeln, die die aufgezeigten Nachteile überwindet. Diese Aufgabe wird bei einer Laminiereinrichtung mit den Merkmalen des Oberbegriffs des Anspruchs 1 gelöst, wobei die Rahmenstruktur aus mindestens zwei Rahmensegmenten modular aufgebaut ist, und die Rahmensegmente mit einander zu fixeren eingerichtet sind und die Auflageebene aus nebeneinander angeordneten einzelnen Flächensegmenten gebildet ist.

Die Fixierung findet u.a. dadurch statt, dass herausragende Schienenelemente auf dem einen Segment mit dem Rahmenelement auf dem angrenzenden Segment fixiert wird.

Die erfindungsgemäße Laminiervorrichtung ist aus modularen Elementen aufgebaut. Diese Elemente sind einmal Rahmensegmente, aus denen die tragende Struktur des Laminiertisches abschnittsweise zusammengesetzt ist, zudem Flächensegmente, die aneinander angrenzend den Auflagetisch für das zu laminierende Objekt bilden, Schienenelemente, die längsseits am Rahmen angebracht sind und die als Führung für die verfahrbare Walzeneinheit dienen, mit der die Folie unter Andruck aufgebracht werden kann.

In einer weiteren zweckmäßigen Ausführungsform umfasst die Laminiervorrichtung wenigstens zwei Rahmensegmente, die als geometrisch gleich geformte Modulteile ausgeführt sind.

In einer weiteren zweckmäßigen Ausführungsform umfasst die Laminiervorrichtung, dass als Komponenten eines Rahmensegments zwei parallel angeordnete Rahmenteile, mindestens eine Querstrebe und mindestens zwei Standbeine vorhanden sind.

In einer weiteren zweckmäßigen Ausführungsform umfasst die Laminiervorrichtung, dass die Schienenelemente etwas über die Rahmenteile herausgeführt sind und mittels einer Verbindungstechnik an einem Rahmensegment fixiert werden können.

Dadurch wird eine stabile Verbindung an dem Nachbarsegment erzielt.

In einer weiteren zweckmäßigen Ausführungsform umfasst die Laminiervorrichtung, dass die Teile der Schienenelemente die etwas über die Rahmenteile herausgeführt sind, mittels einer Verbindungstechnik an einem angesetzten Rahmensegment fixiert werden können.

Verbindungstechnik ist z.B. Schrauben, Bolzen, Pater/Mater Konstruktionen, die die Schienen an der Bettung und im Anschluss an einander fixieren.

In einer weiteren zweckmäßigen Ausführungsform umfasst die Laminiervorrichtung, dass einzelne oder alle Komponenten der Rahmensegmente aus Metall, z.B. Stahl oder Aluminium bestehen.

In einer weiteren zweckmäßigen Ausführungsform umfasst die Laminiervorrichtung, dass die Schienenelemente in dem Gesamtumfang der Laminiervorrichtung aus mehreren Segmenten zusammengesetzt sind.

In einer weiteren zweckmäßigen Ausführungsform umfasst die Laminiervorrichtung, dass die Segmente der Schienenelemente als Komponente der Rahmensegmente angeordnet sind.

In einer weiteren zweckmäßigen Ausführungsform umfasst die Laminiervorrichtung, dass die Segmente der Schienenelemente Justierelemente (Fugen, Nuten, Konusstücke o.ä.) als Montierhilfe aufweisen, wobei die Rahmensegmente mittels der Schienenelemente im Anschluss an einander zusammengebaut sind.

In einer weiteren zweckmäßigen Ausführungsform umfasst die Laminiervorrichtung, dass die Flächensegmente aus tragfähigem Material bestehen.

In einer weiteren zweckmäßigen Ausführungsform umfasst die Laminiervorrichtung, dass die Flächensegmente aus Glas bestehen.

In einer weiteren zweckmäßigen Ausführungsform umfasst die Laminiervorrichtung, dass die auf der Auflageebene angebrachte Folie aus lichtdurchlässigem Material, z.B. Kunststoff besteht.

In einer weiteren zweckmäßigen Ausführungsform umfasst die Laminiervorrichtung, dass an der Rahmenstruktur unterhalb der Auflageebene Beleuchtungselemente angebracht sind.

In einer weiteren zweckmäßigen Ausführungsform umfasst die Laminiervorrichtung, dass die Achse der Walze an beiden Enden von Halterungen aufgenommen wird, die mit dem Verschiebemechanismus verbunden sind, und die vertikale Verstelleinrichtungen aufweisen, mittels derer die Walze beidseitig gegenüber der Auflageebene höhenverstellbar ist, und dass die Halterungen so ausgeführt sind, dass die Achse der Walze in der Weise aufgenommen ist, dass diese beim Verfahren der Walze aus ihrer Lage quer zu den Schienenelementen nicht verkippen kann.

Die erfindungsgemäße Laminiervorrichtung kommt ohne eine Querstrebe über der Walze aus. Diese Konstruktion wird - unter anderem - ermöglicht durch eine stabile Lagerung der Walzenachse mittels verwindungsgeschützter Halterungen und einen auf den Führungsschienen verkantungsfrei laufenden Verfahrmechanismus.

In einer weiteren zweckmäßigen Ausführungsform umfasst die Laminiervorrichtung, dass die Walze als tragenden Kern ein Hohl- oder Vollprofil aus Metall, z.B. Stahl aufweist und eine Halterung dieses Profil entweder direkt oder entsprechend axial fortgeführte Endteile mittels eines passgenauen Schafts aufnimmt und kippsicher fixiert.

In einer weiteren zweckmäßigen Ausführungsform umfasst die Laminiervorrichtung, dass die Walze als tragenden Kern ein Hohl- oder Vollprofil aus Metall, z.B. Stahl aufweist und jede Halterung dieses Profil oder entsprechend axial fortgeführte Endteile mittels mindestens zweier drehbarer Lager, z.B. Kugel- oder Walzlager, aufnimmt.

In einer weiteren zweckmäßigen Ausführungsform umfasst die Laminiervorrichtung, dass der VerschiebemechanismusStabilisierungselemente aufweist, mittels derer der Verschiebemechanismus auf den Schienenelementen kipp- und verkantungssicher linear beweglich aufsitzt.

In einer weiteren zweckmäßigen Ausführungsform umfasst die Laminiervorrichtung, dass die Walze mittels der vertikalen Verstelleinrichtungen, die direkt mit dem Verschiebemechanismus verbunden sind, vertikal bewegt wird, wobei die Laminiervorrichtung ohne eine Querstrebe über der Walze kommt.

Die Erfindung wird im Folgenden anhand bevorzugter Ausführungsbeispiele unter Bezug auf die Zeichnungen näher erläutert.

Es zeigen im Einzelnen:
Figur 1 Bekannter Laminiertisch nach dem Stand der Technik
Figur 2 Perspektivansicht auf ein Ausführungsbeispiel des erfindungsgemä-βen modularen Systems für Laminiertische
Figur 3 Aufsicht auf den erfindungsgemäß modular zusammengesetzten Laminiertisch nach Fig. 2
Figur 4 Rahmensegment des erfindungsgemäßen modularen Systems für Laminiertische
Figur 5 Modulare Rahmenkonstruktion
Figur 6 Verlängerte Ausführungsform des erfindungsgemäßen Laminiertisches (Perspektivansicht)
Figur 7 Erweiterte Rahmenkonstruktion (Perspektivansicht)
Figur 8 Perspektivansicht auf ein anderes Ausführungsbeispiel des erfindungsgemäßen Laminiertisches
Figur 9 Seitenansicht des erfindungsgemäßen Laminiertisches
Figur 10 Detailansicht eines Ausführungsbeispiels des erfindungsgemäßen Verfahrmechanismus

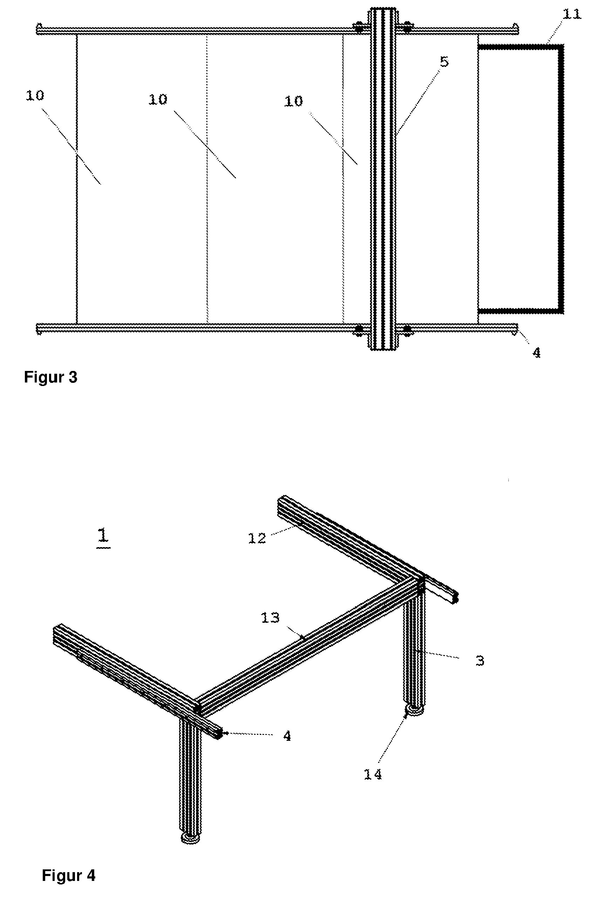

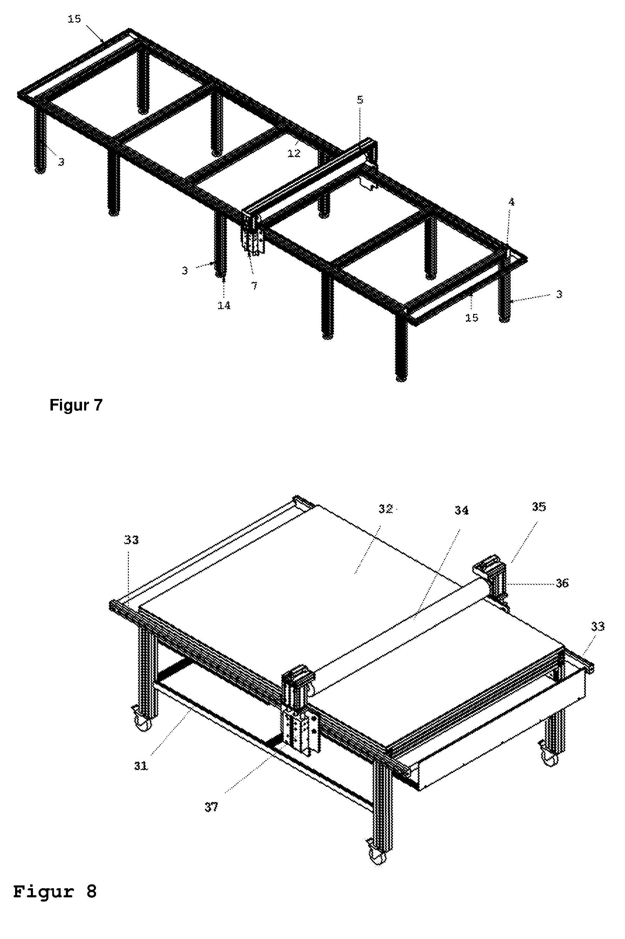

Figur 2 zeigt ein erstes Ausführungsbeispiel des erfindungsgemäßen modularen Systems für Laminiertische. In dieser einfachen Ausführung sind nur zwei Rahmensegmente (1), (2) der bevorzugten Bauform nach Fig. 3 mittels einer Verbindungstechnik aneinander fixiert und bilden so eine einfache rechteckförmige Rahmenstruktur mit vier Standbeinen (3). Die Verbindungstechnik kann beispielweise ein Pater/Mater Konstruktion oder Boltzen/Schraubenmutter Konstruktion sein. An zwei parallelen Seiten dieser Rahmenstruktur sind die Schienenelemente (4) mit einer Verbindungstechnik wie eine Schraube oder eine Boltzen/Schraubenmutter Konstruktion angesetzt. Diese Schienenelemente (4) dienen als Führung für die quer verlaufende Walzeneinheit (5), die über einen beweglichen Mechanismus (7) wie im vorbekannten Laminiertisch nach Fig. 1 oder den beweglichen Mechanismus (37) nach Fig. 8 beidseitig an den Schienenelementen (4) angesetzt ist und linear verfahrbar ist. Dieser bewegliche Mechanismus (7), ein Verschiebemechanismus oder eine Verfahreinrichtung, kann z.B. als System aus Kugel-, Walz- oder Gleitlagern ausgeführt sein.

Die Walze (8) kann mit Hilfe einer in der Walzeneinheit (5) vorhandenen vertikalen Verstellvorrichtung (nicht dargestellt) mit dem gewünschten Andruck auf die Tischebene (9) gesenkt werden. Diese Tischebene (9) ist in dem erfindungsgemäßen modularen System aus einzelnen Flächensegmenten (10) zusammengesetzt, die auf der Rahmenstruktur (1, 2) aufliegen und aus tragfähigem Material bestehen, das dem Andruck der Walze (8) ohne größeres Durchbiegen standhält. Je nach Belastungswerten können Holzplatten, versteifte Blech- oder Kunststoffplatten oder auch stabile Glasplatten entsprechender Stärke eingesetzt werden. Letztere sind besonders vorteilhaft, da hier mittels Beleuchtungseinrichtungen, z.B. Leuchtdioden, Halogenlampen, oder Leuchtstoffröhren unterhalb der Tischebene (9) der Laminierbereich flächig ausgeleuchtet werden kann und damit der Positioniervorgang der Laminierfolie über das zu laminierende Objekt erheblich erleichtert wird.

Auf die Flächensegmente (10) ist eine vorzugsweise lichtdurchlässige Folie aufgelegt (nicht dargestellt), die die Übergänge zwischen den einzelnen Flächensegmenten (10) überbrückt und damit störende Effekte der (schmalen) Spalte für den Laminierprozess eliminiert. Diese Folie kann beispielsweise als eine ca. 5mm dicke PVC Schneidefolie ausgeführt sein.

In dem dargestellten Ausführungsbeispiel ist unterhalb der Tischebene (9) zusätzlich eine Auflageebene (11) eingesetzt.

Diese kann im Randbereich über die Tischebene (9) herausgeführt sein und z.B. als Halterung für Beleuchtungselemente dienen.

Figur 3 zeigt eine Aufsicht auf den erfindungsgemäß zusammengesetzten Laminiertisch nach Figur 2. In diesem Ausführungsbeispiel sind drei gleich dimensionierte Flächensegmente (10) vorgesehen. Das erfindungsgemäße modulare System ist aber nicht auf identische Größen der Flächensegmente (10) beschränkt: Je nach gewünschter Länge des Laminiertisches können auch Flächensegmente (10) unterschiedlicher Breite bis zur gewünschten Gesamtlänge der Laminiervorrichtung aneinandergesetzt werden.

Wie in Figur 4 gezeigt, besteht in diesem Ausführungsbeispiel jedes Rahmensegment (1, 2) aus zwei parallelen Rahmenteilen (12), zwei Standbeinen (3) und einer Querverbindung (13). Zur Ausrichtung oder zum Ausgleich von Bodenunebenheiten sind Schraubstutzen (14) vorgesehen. Alternativ können hier auch Rollen vorgesehen sein. Die erwähnten Elemente sind diejenigen Elemente, die mindestens Teil eines Rahmensegmentes (1, 2) sind.

Das erfindungsgemäße System ist nicht auf die hier dargestellte Ausführungsform beschränkt. Andere Ausführungsformen können auch zusätzliche Querverbindungen (13) aufweisen (nebeneinander oder auch übereinander zu Stabilisierungszwecken) oder auch zusätzliche Standbeine (3), beispielsweise als Mittelstütze bei sehr breiten Querverbindungen (13). Alle diese Elemente sind vorzugsweise als standardisierte Einzelstücke gefertigt und können mittels üblicher Verbindungstechnik zum Rahmensegment (1, 2) zusammengesetzt werden (wie Schrauben oder eine Nut/Feder Konstruktion). Als vorteilhaft hat sich die Verwendung von Profilteilen aus Metall, z.B. Aluminium erwiesen, die handelsüblich in verschiedenen Standardformen verfügbar sind.

An der Außenseite des Rahmenteils 12 wird ein Schienenelement 4 montiert, das vorteilhaft im ersten Ende des Rahmenteils 12 ein Längsstück X cm über die Länge hinaus fortsetzt und im zweiten Ende das gleiche Längsstück X cm vor dem Endabschluss des Rahmenteils 12 endet. Dadurch wird ein stabiles Zusammenmontieren der einzelnen Segmente beim Modulaufbau des Systems erzielt.

Ein besonderer Vorzug des erfindungsgemäßen modularen Systems für Laminiereinrichtungen besteht darin, dass alle zum Aufbau benötigten Rahmensegmente (1, 2) in beliebigen Grundmaßen als standardisierte Modulteile angefertigt werden können. Dabei können bereits mit nur einer einzigen Ausführungsform eines Rahmensegments (1, 2) schrittweise Längenänderungen eines Laminiertischs durch zusätzliches Anfügen erreicht werden. Besonders vorteilhaft sind verschiedene Rahmensegmente (1, 2), die beispielsweise standardmäßig unterschiedliche Länge (z.B. 1, 2 und 3 Meter) der parallelen Rahmenteile (12) aufweisen. Kombinationen aus solchen Rahmensegmenten (1, 2) erlauben einen schnellen Aufbau von Laminiervorrichtungen nahezu beliebiger Länge. In vergleichbarer Weise können auch die Maße der Querverbindungen (13) als verschiedene standardisierte Ausführungen der Rahmensegmente (1,2) vorgesehen werden. Die Elemente werden mittels des herausragenden Schienenelement (4) von X cm, das zu den Seiten des nachfolgenden Segments passt, stabil an einander fixiert.

Vorteilhaft ist beim erfindungsgemäßen System auch die einfache Transportmöglichkeit, da im Prinzip für den Aufbau oder die nachträgliche Veränderung einer erfindungsgemäßen Laminiervorrichtung entweder die Rahmensegmente (1, 2) als vormontierte Modulteile oder auch nur die Einzelstücke (3, 4, 12, 13) als Rahmenelemente geliefert werden können.

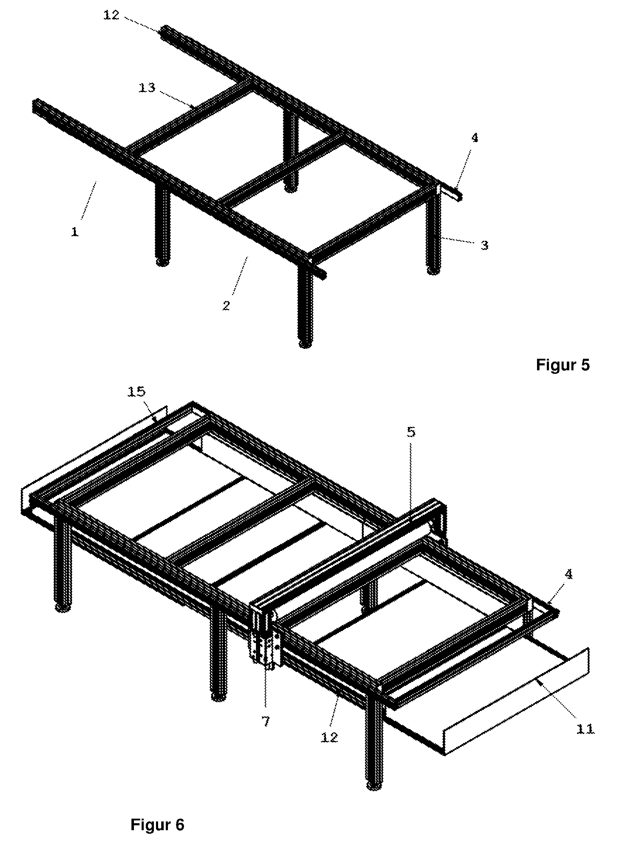

Das erfindungsgemäße System ermöglicht es, spätere Veränderungen ohne größeren Aufwand durchzuführen. Wie Figur 5 zeigt, kann eine Verlängerung einer vorhandenen erfindungsgemäßen Laminiereinrichtung einfach durch Ansetzen weiterer Rahmensegmente (1, 2) erfolgen. Es sind dann anschließend nur weitere Flächensegmente (10) aufzulegen und eine entsprechend verlängerte Folie (z.B. PVC Schneidfolie) über die vergrößerte Fläche der Laminierebene auszulegen.

Figur 6 zeigt eine Perspektivansicht der Rahmenkonstruktion eines entsprechenden aus mehreren Rahmensegmenten (1, 2) zusammengesetzten Laminiereinrichtung.

Bei dem erfindungsgemäßen modularen System für Laminiervorrichtungen sind ― je nach resultierender Gesamtlänge - mehrere Schienenelemente (4) bis zur ganzen Länge des Laminiertischs an jeder Seite des Laminiertischs zur Führung der Walzeneinheit (5) zu einer linearen Struktur zusammengesetzt.

Um beim Ansetzten weiterer Rahmensegmente (1, 2) eine fortlaufende Schienenstruktur mit beliebiger Länge zu gewährleisten, sind im dargestellten Ausführungsbeispiel die Schienenelemente (4) etwas über die parallelen Rahmenteile (12) herausgeführt (vergl. z.B. Fig. 2, Fig. 4). Damit können diese Teile der Schienenelemente (4) mittels einer Verbindungstechnik an ein angesetztes Rahmensegment (1, 2) mechanisch fixiert werden. Der Übergang auf ein nachfolgendes Schienenelement (4) erfolgt somit auf dem Rahmenteil (12) und kann damit passgenau eingestellt werden.

Dabei hat es sich als besonders vorteilhaft erwiesen, die jeweiligen Enden eines jeden Schienenelements (4) als Montierhilfe mit Justierelementen (z.B. Fugen, Nuten, Konus o.ä.) auszustatten, die beim Aneinandersetzten für einen bündigen und nahezu fugenfreien Übergang von einem Schienenelement (4) zum sich anschließenden Schienenelement sorgen. Damit ist eine leichte und ruckfreie Verfahrung der Walzeneinheit (5) über die gesamte Länge des Laminiertisches gewährleistet.

Die bei fertigem Aufbau u.U. überstehenden Teile der Schienenelemente (4) können, wie in Fig. 7 dargestellt, mittels Abschlusselement (15) verbunden sein, zur Stabilisierung und Vermeidung einer Verletzungsgefahr an vorspringenden Teilen. Alternativ kann dieses Abschlusselement (15) als abnehmbare Stange ausgeführt sein und z.B. zur Aufbewahrung einer Laminierrolle dienen.

Die modulare Bauweise des erfindungsgemäßen Systems macht es sogar möglich, nachträglich auch die Breite einer Laminiereinrichtung zu ändern. Dazu können die Querverbindungen (13) der Rahmensegmente (1, 2) einfach durch längere ersetzt werden. Anschließend sind dann nur die Walzeneinheit (5), die Flächensegmente (10) und die PVC Schneidefolie durch entsprechend breitere Ausführungen zu ersetzen.

Das erfindungsgemäße modulare System für Laminiervorrichtungen löst das Problem des Transports auch sehr groß dimensionierter Laminiervorrichtungen, da statt eines kompakten Laminiertisches nur die erfindungsgemäßen modularen Komponenten (1; 2; 4; 5; 10) zu transportieren sind. Ebenso löst die Erfindung das Problem der lnstallation großer Laminiervorrichtungen, da normale räumliche Verhältnisse (übliche Türen, Treppen, Aufzüge usw.) völlig ausreichend sind, um problemlos alle modularen Teile der erfindungsgemäßen Laminiervorrichtung in jeden geeigneten Werkraum hineinzubringen und dort dann zur Laminiervorrichtung der gewünschten Größe zusammenzusetzen. Ein weiterer Vorteil der erfindungsgemäßen Laminiervorrichtung besteht darin, dass durch Anfügen und/oder Austausch erfindungsgemäßer modularer Segmente (1, 2; 10) oder einzelner Komponenten (12; 13) die Maße des zusammengesetzten Laminiertisches sowohl in Läge als auch Breite sehr einfach und kostengünstig verändert werden können.

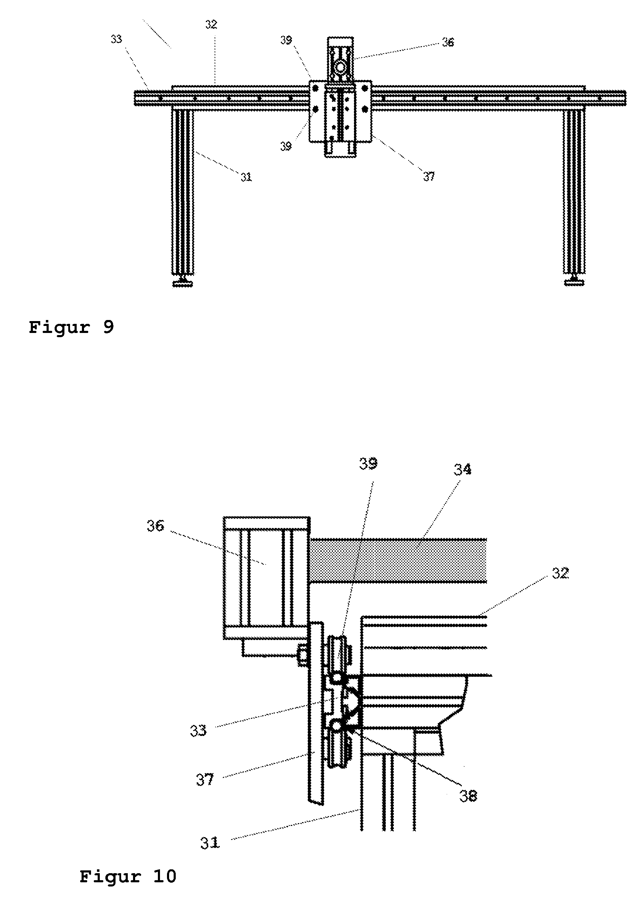

Figur 8 ist ein anderes Ausführungsbeilspiel der Erfindung und zeigt eine Perspektivansicht des erfindungsgemäßen Laminiertischs. Eine Rahmenstruktur (31) trägt die Auflageebene (32) auf die zu laminierenden Objekte aufgelegt werden. An gegenüberliegenden Längsseiten der Rahmenstruktur (31) sind zwei horizontal parallel verlaufende Schienenelemente (33) befestigt. Auf diesen Schienenelementen (33) sind beidseitig Verfahreinrichtungen (37) angeordnet, die auf den Schienenelementen linear verfahrbar sind (vergl. Figur 9).

Die beidseitig an den Verfahreinrichtungen (37) vorhandenen Halterungen (35) dienen als Lager für eine quer zu den Schienenelementen (33) über der Auflageebene (32) verlaufende Walze (34). In diesen Halterungen (35) ist die Walze (34) an ihren Enden beidseitig gelagert.

Erfindungsgemäß ist zur Erleichterung des Arbeitsablaufs über der Auflagefläche (32) nur die Walze (34) angeordnet. Dazu muss die Walze (34) insbesondere bei größeren Abmessungen des Laminiertischs entsprechend formstabil ausgeführt sein. Hierzu kann beispielsweise als tragender Kern ein Hohl- oder Vollprofil aus Metall, z.B. Stahl vorgesehen sein. Der Vorteil eines hohltragenden Kerns ist, dass Kabel und Druckluftschläuche aus der ersten Verfahreinrichtung (37) und die dazugehöhrige vertikale Verstelleichtung (36) in eine zweite Verfahreinrichtung (37) und die dazugehöhrige vertikale Verstelleichtung (36) geleitet werden, da die zwei Verfahreinrichtungen 37 und die vertikale Verstelleichtungen (36) synchron arbeiten sollen. Der zylindrische Außenbereich der Walze (34) kann z.B. aus Gummi oder Kunststoff bestehen. Die Drehbarkeit der Walze (34) ist dann entweder gewährleistet durch mitrotierendes Metallprofil und drehbare Lagerung in den Halterungen (35) oder ― bei starrem Metallprofil ― durch eine drehbare Lagerung des zylindrischen Außenbereichs der Walze gegenüber dem starren Kern, beispielsweise mittels auf dem Kern angeordneter Kugel- oder Walzenlager.

Beim Laminieren wird die Walze (34) nach Absenken auf die Auflageebene (32) üblicherweise manuell entlang der Schienenelemente (33) gezogen oder geschoben. Da hier insbesondere bei größeren Abmessungen des Laminiertisches die Walze (34) nur auf einer Seite, beispielsweise an einer der beiden Verfahreinrichtungen (37) in Bewegung versetzt wird, entsteht über die Länge der Walze (34) durch Trägheits- und Reibungseffekte eine nicht unbeachtliche Querkraft, deren Wirkung die Achse der Walze (34) aus der exakten Querlage, also rechtwinklig zu den parallelen Schienenelementen (33), in eine Schrägstellung bringen könnte. Dies würde dann zu einem unsymmetrischen Lauf der Walze (34) über das Laminierobjekt führen - bis hin zum Verkanten der Walzenachse und oder der Verfahreinrichtungen (37) auf den Schienenelementen (33) und damit ein ruckender Lauf der Walze (34) oder sogar ein völliges Blockieren.

Erfindungsgemäß sind daher die in den Halterungen (35) vorhandenen Aufnahmen der Walzen-Enden (nicht dargestellt) erfindungsgemäß so ausgelegt, dass sich die Achse der Walze (34) auch bei einem manuell durchgeführten Verfahrvorgang nicht aus der vorgegebenen rechtwinkligen Lage zu den Schienenelementen (33) verkippen kann. Je nach Ausführung der Walze (starrer oder mitrotierender Kern) sind als Aufnahme für die Walzen-Enden entweder passgenaue Schäfte vorgesehen, vorzugsweise aus Metall, z.B. Stahl, die das Kernprofil der Walze (34) entweder direkt, oder ein axial fortgeführtes Endteil, an jedem Ende spielfrei fixieren, oder das mitdrehende Kernprofil (oder Endteil) wird in jedem Aufnahmebereich durch zwei oder mehrere Lager mit entsprechendem Abstand zueinander gehalten, z.B. Kugel- oder Walzenlager, so dass die Achse der Walze (34) an jedem Ende durch diese axial versetzten Fixierungen gegen eine Verkippung gesichert ist.

Beide Halterungen (35) weisen vertikale Verstelleinrichtungen (36) auf, mit denen die Achse der Walze (34) beidseitig gegenüber der Auflageebene (32) höhenverstellbar ist. Mit Hilfe einer in die Verstelleinrichtung (36) integrierten Druckvorrichtung kann die Walze (34) für den Laminiervorgang unter einstellbarem Andruck auf die Auflageebene (32) gesenkt werden kann. Für die Höhenverstellung und ebenso als Druckvorrichtung können beispielsweise gegenüber Widerlagern drehbare Schraubstangen, magnetische Verstellvorrichtungen und/oder Druckluft- bzw. Hydraulikvorrichtungen vorgesehen sein.

Da die Druckvorrichtung an der Walzenachse fixiert ist und diese vertikal verschiebt, und die Druckvorrichtung in der vertikalen Verstelleinrichtung 36, die mit den Verfaheinrichtungen 37 integriert ist, gelagert ist, wird gewährleistet, dass sie nicht verkippt und außerdem, dass eine über die Walze angeordnete Quer-Streben vermieden wird. Um die oben beschriebene Problematik einer möglichen Verkantung der Walzenachse zuverlässig zu verhindern, sind erfindungsgemäß vorzugsweise nicht nur die Aufnahmen der Walzenachsen in den Halterungen (35) entsprechend ausgestaltet, sondern ebenso eine entsprechende Stabilisierung der Verfahreinrichtungen (37) gegen Verkippung vorgesehen.

Die Figur 10 zeigt ein Ausführungsbeispiel einer Verfahreinrichtung (37) in Blickrichtung des Verlaufs eines Schienenelements (33). In diesem Beispiel trägt das Schienenelement (33) an der oberen und unteren Kante ein Rundprofil (38), z.B. eine Stahlstange. Darauf laufen paar-weise angeordnete Rollen (39), so dass die Verfahreinrichtung (37) in diesem Beispiel über insgesamt 4 Rollen (vergl. auch Fig. 9) kipp- und verkantungssicher auf dem Schienenelement (33) linear beweglich aufsitzt.

Die Erfindung ist nicht auf diese Ausführungsform beschränkt. So kann eine vergleichbare Stabilität auch beispielsweise mittels entsprechender Walzen- oder Gleitlager oder anderer dem Fachmann geläufiger mechanischer Systeme für lineare geführte Bewegungen erreicht werden.

Die erfindungsgemäße Vorrichtung kommt mit nur einer verfahrbaren Walze (34) ohne eine zusätzlich stabilisierende Querstrebe über der Auflageebene (32) aus. Ein Laminierprozess ist damit auch bei sehr ausgedehnten Objekten einfach durchzuführen.

## Patentansprüche

1. Laminiervorrichtung mit einer mittels einer Rahmenstruktur getragenen Auflageebene (9,32), auf der eine Folie angebracht ist, die die Auflageebene (9,32) überdeckt, wobei zwei an gegenüberliegenden Seiten der Rahmenstruktur parallel verlaufende Schienenelemente (4,33) befestigt sind, die als Führung für eine quer zu den Schienenelementen (4,33) über der Auflageebene (9,32) verlaufende Walzeneinheit (5) dienen, die über einen beidseitig angeordneten Verschiebemechanismus (7,37) auf den Schienenelementen (4,33) linear verfahrbar ist, wobei die Walzeneinheit (5) eine Walze (8,34) aufweist, welche die Auflageebene (9,32) zumindest teilweise überbrückt und deren Achse mittels vertikaler Verstelleinrichtung beidseitig gegenüber der Auflageebene (9,32) höhenverstellbar ist, **dadurch gekennzeichnet, dass** die Rahmenstruktur aus mindestens zwei Rahmensegmenten (1, 2) modular aufgebaut ist, dass die Rahmensegmente mit einander zu fixeren eingerichtet sind und die Auflageebene (9,32) aus nebeneinander angeordneten einzelnen Flächensegmenten (10) gebildet ist.

2. Laminiervorrichtung nach Anspruch 1, **dadurch gekennzeichnet, dass** die Laminiervorrichtung wenigstens zwei Rahmensegmente (1,2) umfasst, die als geometrisch gleich geformte Modulteile ausgeführt sind.

3. Laminiervorrichtung nach Anspruch 1 oder 2, **dadurch gekennzeichnet, dass** als Komponenten eines Rahmensegments (1, 2) zwei parallel angeordnete Rahmenteile (12), mindestens eine Querstrebe (13) und mindestens zwei Standbeine (3) vorhanden sind.

4. Laminiervorrichtung nach Anspruch 1,2 oder 3, **dadurch gekennzeichnet, dass** die Schienenelemente (4) etwas über die Rahmenteile (12) herausgeführt sind und mittels einer Verbindungstechnik an einem Rahmensegment (1,2) fixiert werden können.

5. Laminiervorrichtung nach Anspruch 4, **dadurch gekennzeichnet, dass** die Teile der Schienenelemente (4),die etwas über die Rahmenteile (12) herausgeführt sind, mittels einer Verbindungstechnik an einem angesetzten Rahmensegment (1,2) fixiert werden können

6. Laminiervorrichtung nach einem der vorangehenden Ansprüche **dadurch gekennzeichnet, dass** einzelne oder alle Komponenten (3, 12, 13) der Rahmensegmente (1, 2) aus Metall, z.B. Stahl oder Aluminium bestehen.

7. Laminiervorrichtung nach einem der vorangehenden Ansprüche, **dadurch gekennzeichnet, dass** die Schienenelemente (4,33) in dem Gesamtumfang der Laminiervorrichtung aus mehreren Segmenten zusammengesetzt sind.

8. Laminiervorrichtung nach einem der vorangehenden Ansprüche, **dadurch gekennzeichnet, dass** die Segmente der Schienenelemente (4,33) als Komponente der Rahmensegmente (1, 2) angeordnet sind.

9. Laminiervorrichtung nach einem der vorangehenden Ansprüche , **dadurch gekennzeichnet, dass** die Segmente der Schienenelemente (4) Justierelemente (Fugen, Nuten, Konusstücke o.ä.) als Montierhilfe aufweisen, wobei die Rahmensegmente (1, 2) mittels der Schienenelemente (4,33) im Anschluss an einander zusammengebaut sind

10. Laminiervorrichtung nach einem der vorangehenden Ansprüche, **dadurch gekennzeichnet, dass** die Flächensegmente (10,32) aus tragfähigem Material bestehen.

11. Laminiervorrichtung nach einem der vorangehenden Ansprüche, **dadurch gekennzeichnet, dass**, die Achse der Walze (8,34) an beiden Enden von Halterungen (35) aufgenommen wird, die mit dem Verschiebemechanismus (7,37) verbunden sind, und die vertikale Verstellein-richtungen (36) aufweisen, mittels derer die Walze beidseitig gegenüber der Auflageebene (9,32) höhenverstellbar ist, und dass die Halterungen (35) so ausgeführt sind, dass die Achse der Walze (8,34) in der Weise aufgenommen ist, dass diese beim Verfahren der Walze (8,34) aus ihrer Lage quer zu den Schienenelementen (4,33) nicht verkippen kann.

12. Laminiervorrichtung nach einem der vorangehenden Ansprüche , **dadurch gekennzeichnet, dass** die Walze (8,34) als tragenden Kern ein Hohl- oder Vollprofil aus Metall, z.B. Stahl aufweist und eine Halterung (35) dieses Profil entweder direkt oder entsprechend axial fortgeführte Endteile mittels eines passgenauen Schafts aufnimmt und kippsicher fixiert.

13. Laminiervorrichtung nach Anspruch 12, **dadurch gekennzeichnet, dass** die Walze (8,34) als tragenden Kern ein Hohl- oder Vollprofil aus Metall, z.B. Stahl aufweist und jede Halterung (35) dieses Profil oder entsprechend axial fortgeführte Endteile mittels mindestens zweier drehbarer Lager, z.B. Kugel- oder Walzlager, aufnimmt.

14. Laminiervorrichtung nach einem der vorangehenden Ansprüche, **dadurch gekennzeichnet, dass** der Verschiebemechanismus (37) Stabilisierungselemente (38, 39) aufweist, mittels derer der Verschiebemechanismus (7,37) auf den Schienenelementen (4,33) kipp- und verkantungssicher linear beweglich aufsitzt.

15. Laminiervorrichtung nach einem der vorangehenden Ansprüche, **dadurch gekennzeichnet, dass** die Walze (8, 34) mittels der vertikalen Verstelleinrichtungen (36), die direkt mit dem Verschiebemechanismus (37) verbunden sind, vertikal bewegt wird, wobei die Laminiervorrichtung ohne eine Querstrebe über die Walze (8, 34) kommt.
